(19) **Europäisches Patentamt**
**European Patent Office**
**Office européen des brevets**

(11) **EP 1 381 229 B1**

(12) **EUROPEAN PATENT SPECIFICATION**

(45) Date of publication and mention
of the grant of the patent:
**10.12.2008 Bulletin 2008/50**

(51) Int Cl.:
*H04N 5/225* (2006.01)     *H04N 5/232* (2006.01)
*H04N 7/18* (2006.01)

(21) Application number: **01978937.9**

(22) Date of filing: **29.10.2001**

(86) International application number:
**PCT/JP2001/009481**

(87) International publication number:
**WO 2002/082805 (17.10.2002 Gazette 2002/42)**

(54) **REAL-TIME OMNIFOCUS MICROSCOPE CAMERA**

ECHTZEIT-OMNIFOKUS-MIKROSKOPKAMERA

CAMERA DE MICROSCOPE OMNIFOCALE EN TEMPS REEL

(84) Designated Contracting States:
**CH DE FR GB LI**

(30) Priority: **30.03.2001 JP 2001100594**

(43) Date of publication of application:
**14.01.2004 Bulletin 2004/03**

(73) Proprietors:
- **National Institute of Advanced Industrial Science and Technology
  Tokyo 100-8921 (JP)**
- **OHBA, Kohtaro
  Tsukuba-shi, Ibaraki 305-0035 (JP)**
- **Kabushiki Kaisha Photron
  Tokyo 102-0071 (JP)**

(72) Inventors:
- **OHBA, Kohtaro
  Tsukuba-Shi, Ibaraki 305-0035 (JP)**
- **NAGASE, Tomohiko
  c/o KABUSHIKI KAISHA PHOTRON
  Tokyo 102-0071 (JP)**
- **NAGAI, Hiroshi
  c/o KABUSHIKI KAISHA PHOTRON
  Tokyo 102-0071 (JP)**

(74) Representative: **Klunker . Schmitt-Nilson . Hirsch
Winzererstrasse 106
80797 München (DE)**

(56) References cited:
**JP-A- 2000 276 121        JP-A- 2000 316 120
JP-A- 2001 257 932        JP-A- 2001 298 755
US-A- 5 296 930           US-B1- 6 188 526**

- **PATENT ABSTRACTS OF JAPAN vol. 1999, no. 12, 29 October 1999 (1999-10-29) -& JP 11 177873 A (DENSO CORP), 2 July 1999 (1999-07-02)**
- **PATENT ABSTRACTS OF JAPAN vol. 2000, no. 14, 5 March 2001 (2001-03-05) -& JP 2000 316120 A (DENSO CORP), 14 November 2000 (2000-11-14) -& US 6 344 930 B1 (KANEKO TAKASHI ET AL) 5 February 2002 (2002-02-05)**
- **PATENT ABSTRACTS OF JAPAN vol. 2000, no. 13, 5 February 2001 (2001-02-05) -& JP 2000 276121 A (SONY CORP), 6 October 2000 (2000-10-06)**
- **PATENT ABSTRACTS OF JAPAN vol. 013, no. 391 (P-926), 30 August 1989 (1989-08-30) & JP 01 140118 A (MITSUBISHI HEAVY IND LTD), 1 June 1989 (1989-06-01)**

**Description**

Technical field

The present invention relates to a real-time all-in-focus microscopic camera that provides, as motion pictures, all-in-focus images of which viewing fields are all in-focused, respectively.

Background art

In recent years, various operations which require an operator to use a microscopic camera, such as operating cells or genes or assembling micro machines, is on the increase.

For performing these operations, an operator should work with viewing an object through a lens, so that, in most cases, it is required for the operator to focus the lens. To be specific, the operator is required to manually adjust the focal length of a microscopic camera to focus each of the depth-directional portions of an object to be observed. Observing the images of each depth-directional portion of the object, which are acquired in response to each time of focusing, will lead to formulation of a three-dimensional shape of the object in the operator's mind. The operator will rely on this shape formulated in the mind when the operator does work. However it takes a long time and needs a large amount of labor in doing this work, so that operation efficiency is low and a comparatively large amount of burden is given the operator. It is also required for the operation to have a skill in completing work to be desired.

When the person observes an object with the naked eye, it is normal that the person eyes focus onto far locations as well as near locations. The reason is that the eyes function as a variable-focal mechanism in such a manner that near in-focused images and far in-focused images are mutually synthesized in the mind in an automatic fashion.

Like the variable-focal mechanism realized by the human eyes, an all-in-focus microscopic camera has got a lot of attention as a camera which is always in-focused onto all the positions of the field of view without manual focus-adjustment operations. It hat been known that this type of conventional all-in-focus microscopic camera is driven by mechanically moving a lens so as to focus onto each position of the field of view.

However, in the conventional all-in-focus microscopic camera in which the lens is moved mechanically to various positions, it takes a long time (a few seconds to a few minutes) to obtain an all-in-focus image. This is far from real-time observation, whereby operation efficiency of work with this camera is lowered.

JP 2000 316120 A (DENSO CORP) discloses a CCD camera device producing fully focussed images by recording images at different locations of a focussing lens and selecting pixel regions which are in focus from the different images and combining these regions to one fully focussed image.

Disclosure of the Invention

An object of the present invention is to provide, with due consideration to the situations concerning with the conventional all-in-focus microscopic camera, a real-time all-in-focus microscopic camera that is able to visualize, as motion pictures, all-in-focus images of a higher frame rate, thus providing all-in-focus images which are superior in the real-time performance (i.e., a live characteristic), which is as close as human eyes' direct observation.

A principle of a real-time all-in-focus microscopic camera according to the present invention will now be outlined below.

The real-time all-in-focus microscopic camera adopts a movable-focal mechanism of which focal length is changeable at a fast rate. The movable-focal mechanism is able to change the focal length in sequence at a repetition rate larger than, for instance, 100 times per second. In order to visualize motion pictures at a high real-time performance, it is required to have a frame frequency of 30 Hz or more. Hence, by way of example, the focal length of a lens of this camera is changed at a repetition frequency of 30 Hz or more. For example, during a period of 1/30 seconds, a large number of images (a plurality of frames) are taken in, and a portion (region or pixel) which is in-focused in each image is extracted. All of the extracted portions are synthesized into one frame of image to produce a single all-in-focus image. This production of the single all-in-focus image is repeated 30 times per second, for instance. This way of processing makes it possible to provide a real-time all-in-focus microscopic camera that has a real-time all-in-focus function, like the human eyes.

Based on the above principle, in the present invention, there is provided a real-time all-in-focus microscopic camera comprising: a movable focal mechanism having a focal length changeable corresponding to a fast repetition frequency regarded as substantially being real time; a lens driver driving the movable focal mechanism to change the focal length corresponding to the repetition frequency; a high-speed imaging apparatus imaging an object through the movable focal mechanism at a fast frame rate that allows images to be read out a plurality of times every repetition period corresponding to the repetition frequency; and an image processor processing the images acquired by the high-speed imaging apparatus into all-in-focus images in real time.

Preferably, the real-time all-in-focus microscopic camera further comprises a display apparatus displaying the all-in-focus images processed by the image processor. The high-speed imaging apparatus is configured to perform synchronously with the movable focal mechanism (11A) imaging based on at least one of techniques consisting of parallel and simultaneous reading of image data from a plurality of divided regions or a plurality of pixels composing a pixel region for the imaging, and, reducing the number of pixels to be read out when reading image data from the individual pixels of a plurality of divided regions.

Further, a preferred example is that the image processor comprises evaluation means for evaluating, pixel by pixel, a value of IQM (Image Quality Measure) on a plurality of two-dimensional images acquired while the focal length of the movable focal mechanism is changed within a predetermined range and image producing means for producing each of the all-in-focus images by mapping image data at each pixel which is best in-focused on the basis of the value of the IQM evaluated by the evaluation means. In this case, by way of example, the evaluation means is configured to analyzing a local spatial frequency and applying smoothing at and to image data of each pixel on each of the plurality of two-dimensional images. In addition, it is preferred that the image producing means includes removal means for removing, from the image data at each of the pixels which are best respectively, image data at pixels where a blur of the object is laid on a peripheral portion of the object. This removal means provides all-in-focus images with almost no ghost image and with high reliability. As one example, the removal means is configured to apply, to the value of the IQM evaluated by the evaluation means, processing using a predetermined threshold of the IQM such that the image data at the pixels where the blur of the object is laid on the peripheral portion of the object is removed.

Brief Description of the Drawings

In the accompanying drawings:

Fig. 1 is a block diagram showing the entire configuration of a real-time all-in-focus microscopic camera according to a first embodiment of the present invention;
Fig. 2 is a functional block diagram primarily showing the functions of the real-time all-in-focus microscopic camera;
Fig. 3 illustrates scan timing carried out by a high-speed imaging camera:
Fig. 4 pictorially shows the configuration and operations of both of a camera sensor and a camera output circuit incorporated in the high-speed imaging camera;
Fig. 5 is a functional block diagram explaining simplified evaluation processing of an IQM value, which is carried out by an image processor;
Figs. 6A to 6C each pictorially show a single-focus image, which are drawn for comparison with an all-in-focus image;
Fig. 6D pictorially exemplifies an all-in-focus image, which is drawn for comparison with the single-focus images shown in Figs. 6A to 6C;
Fig. 7A pictorially exemplifies an image in which a ghost to be removed is present, which is illustrated for a second embodiment of the present invention;
Fig. 7B, which is shown for comparison with Fig. 7A, pictorially exemplifies an image obtained after the ghost removal processing carried out in the second embodiment; and
Fig. 8 is a flowchart showing an algorism for image processing including ghost removal processing, which is executed by the real-time all-in-focus microscopic camera according to the second embodiment.

Preferred Embodiments for Carrying out the Invention

With reference to the accompanying drawings, a real-time all-in-focus microscopic camera according to embodiments of the present invention will now be described.

(First embodiment)

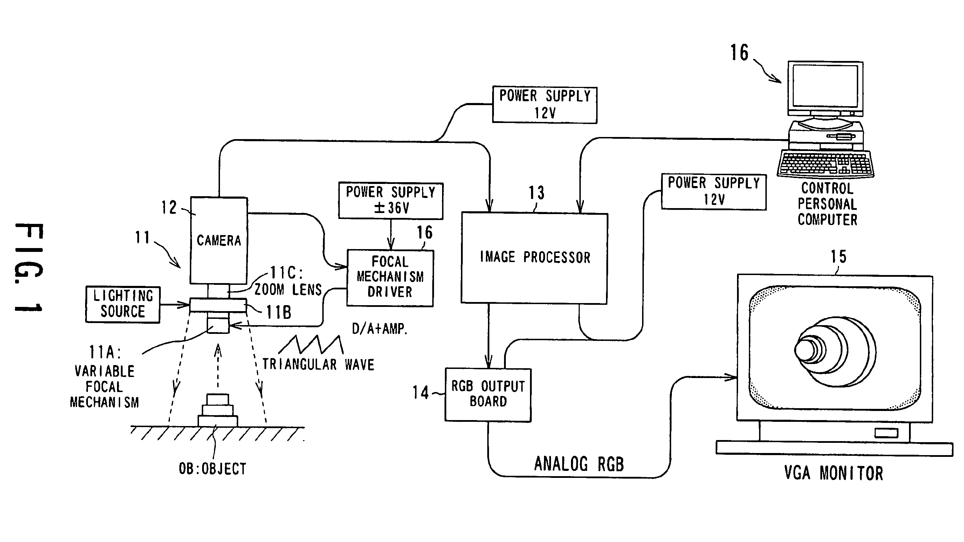

Referring to Figs. 1 to 6, a first embodiment of a real-time all-in-focus microscopic camera according to the present invention will now be described.

Fig. 1 shows an entirely outlined configuration of the real-time all-in-focus microscopic camera. This microscopic camera is provided with an optical system 11 to receive light reflected from an object OB and a high-speed imaging camera to which the optical system 11 is attached. The high-speed imaging camera, which serves as a high-speed imaging apparatus, composes a camera head of the real-time all-in-focus microscopic camera. This real-time all-in-focus microscopic camera is further provided with an image processor 13 to receive data imaged by the high-speed imaging camera 12 and process the received data at a high rate for producing all-in-focus images, an RGB output board 14 to perform coloring processing on the all-in-focus images produced by the image processor 13, and a monitor 15 to visualize the all-in-focus images that have been subjected to the coloring processing at the RGB output board 14. In addition, the microscopic camera has a lens driver 16.

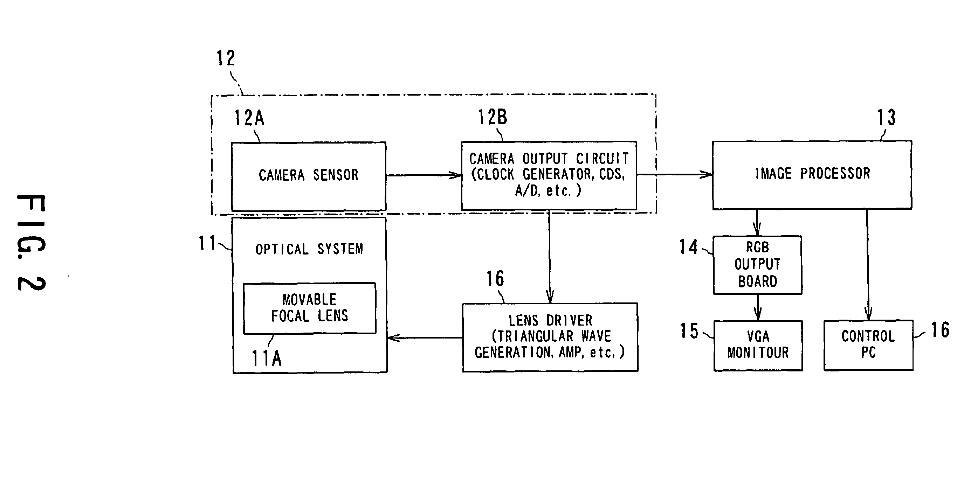

Fig. 2 shows a functional block diagram of the real-time all-in-focus microscopic camera provided with the foregoing components. The high-speed imaging camera 12 is provided with a camera sensor 12A and a camera output circuit 12B to process an output signal from the camera sensor.

The optical system 11 has a movable focal mechanism 11A, a lighting system 11B, and a zoom lens 11C, which are arranged in this order in the reflected direction from the object OB.

Of these components, the movable focal mechanism 11A adopts a piezoelectric element to which voltage is applied to control a focal length thereof. Such a configuration has been known by, for example, "T. Kaneco et at., "A Long-focus depth visualizing mechanism using a variable focal lens," Institute of Electrical Engineers, Micromachine study group 1997" and "Takashi Kaneco et al., "A New Compact and Quick-Response Dynamic Focusing Lens," Transducers 97, 1997."

The variable focal mechanism 11A is configured, by way of example, to have a PZT bimorph actuator and a glass diaphragm. Changing voltage applied to the PZT bimorph actuator will lead to changes in the glass diaphragm. Raising the frequency of the voltage applied to the actuator causes the glass diaphragm to change at a high rate, thus changing its focal length at a fast speed from focal lengths for a convex lens to those for a concave lens. It has been confirmed that this movable focal mechanism 11A exhibits a frequency response with no phase delay up to 150 Hz or thereabouts. When no voltage is applied to the PZT bimorph actuator, this actuator remains a flat glass.

The movable focal mechanism 11A is secured to the tip of the micro zoom lens 11C with the lighting system 11B therebetween. This configuration provides variable focus means for scanning the inherent optical characteristics (focal length) of the micro zoom lens at a high speed.

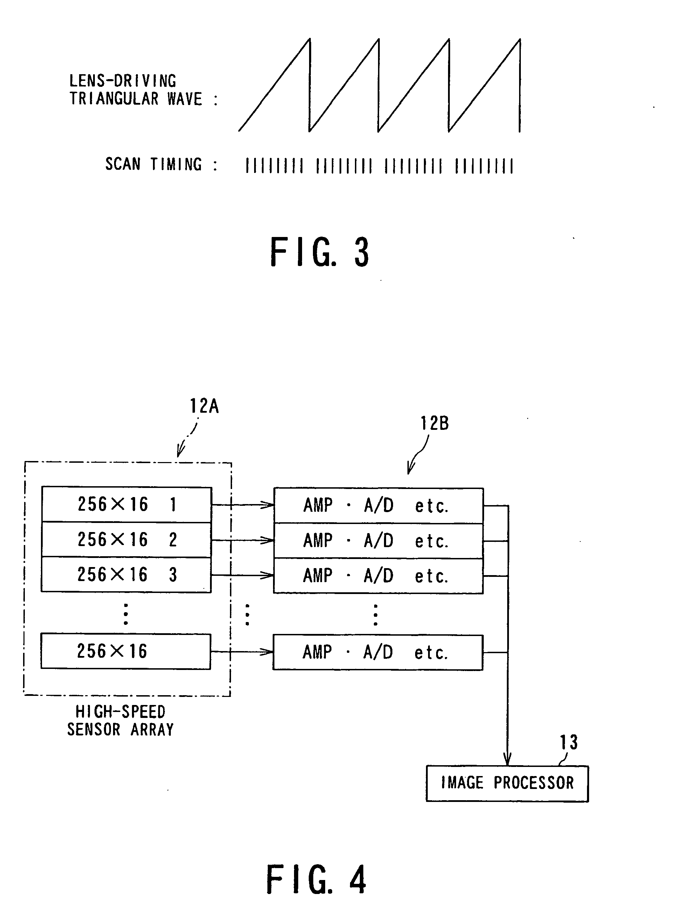

Fig. 3 shows timings at which the lens driver 16 drives the foregoing movable focal mechanism 11A. As shown in Fig. 3, the movable focal mechanism 11A is driven in synchronism with a triangular wave of 30 Hz, in which eight times are scanned per each triangular waveform. This triangular wave is generated by the lens driver 16 with the use of a synchronization signal sent from the camera output circuit 12B of the high-speed imaging camera 12. As stated above, the movable focal mechanism 11A with the piezoelectric element has a hysteresis characteristic, the hysteresis of the mechanism 11A is always reset every triangular waveform (i.e., per eight-time scan).

Before explaining the high-speed imaging camera 12, various techniques for high-speed imaging will now be explained.

The high-speed imaging camera usually adopts a scheme for raising a frame rate, which is attained by employing solely or employing in a combination 1) raising a reading clock at the sensor, 2) reducing the number of reading pixels in the sensor, and/or 3) reading pixels in parallel in the sensor.

Of these techniques, the first technique of raising the pixel rate would be easier to understand in a theoretical viewpoint, but there are limitations in the high-speed imaging in terms of the characteristics of a sensor device and/or the conditions of a peripheral circuit.

The second technique of reducing the number of pixels to be read is realized as follows. For instance, if there is a sensor of 500 x 500 pixels which can be imaged at a frame rate of 30 frames, reading pixels is stopped when 250 x 250 pixels have been finished to be read, before proceeding to reading the pixels for the next frame. This way of reading the pixels is speeded up four times, thus the number of frames being 120 frames (=30 x 4). In this case, however, the resolution of images reduces.

The third technique of reading pixels in parallel has been executed in various modes. One example is that the region of pixels composing an imaging region is formed into plural regions each having a certain area serving as a high-speed imaging sensor. For example, high-speed cameras "ULTIMA series" produced by PHOTRON Limited have a high-speed sensor (256 pixels (in the lateral direction) x 16 pixels (in the longitudinal direction), as pictorially shown in Fig. 4. In other words, the camera has the 16 independent high-speed sensors arranged in an array in parallel with each other, thereby providing an imaging region of a pixel size of 256 x 256 pixels as a whole. Each high-speed sensor is subjected to pixel reading at 25 MHz.

The camera sensor 12A of the high-speed imaging camera 12 according the present embodiment adopts the foregoing third parallel-imaging technique, and as shown in Fig. 4, the imaging high-speed image sensors are disposed in an array. Incidentally, the high-speed imaging camera 12 may be configured by solely employing the foregoing second technique or employing a combination of the second and third techniques.

Still, the third parallel-imaging technique may be executed in other various parallel-imaging modes, not limiting to the above configuration where the plural high-speed sensors are disposed in an array in parallel with each other.

One such an example is that a single imaging region (for example, 256 x 256 pixels) serving as an imaging region is divided into a plurality of regions (for example, four regions) in both the lateral and longitudinal directions and image data are read simultaneously in parallel from the plural divided regions for speeding up the reading operation.

Another example concerns with a configuration where, from the pixel data of a single imaging region, image data are read simultaneously every plural lines (for example, two lines each consisting of for example 256 pixels) until all the lines are finished being read out, so that the reading operation can be speeded up.

Still another example is to read simultaneously image data from plural pixels (for example, 10 pixels) of each line (for example, 256 pixels) composing a single imaging region, before being repeated along the line and then the remaining lines, so that the reading operation can be speed up.

The camera output circuit 12B is provided with a processing circuit that has an amplifier, CDS (Correlated Double Sampling) circuit, and A/D converter for each of the sensors, in addition to a clock generator. Hence, image data coming from the camera sensor 12B is fed to the camera output circuit 12B, in which the image data is amplified, CDS-processed and digitized every processing circuit. Data outputted from the camera output circuit 12B is supplied to the signal processor 13 on the basis of an LVDS (Low Voltage Differential Signaling).

The image processor 13 is composed of, for instance, hardware logics that use a high-speed and large-capacity FPGA (Field Programmable Gate Array). This image processor 13 has a board on which the FPGA, a large-capacity SDRAM, and an LVDS interface to interface with external devices. The SDRAM provides various types of memories from and into which original images acquired from the high-speed imaging camera 12, values of an IQM (Image Quality Measure) which will be described later, all-in-focus images, and information about a focal length can be read and written.

The image processor 13 is responsible for, pixel by pixel, evaluating an IQM value of image data taken in, while the focal length of the movable focal mechanism 11A is changed.

Before the evaluation, the IQM will be described. The IQM is based on an optical theory called "Depth from Focus." (For instance, refer to such papers as "Masahiro Watanabe and Shree K. Nayer, "Minimal Operator Set for Passive Depth from Defocus," CVPR'96, pp.431-438, 1996"; "Shree K. Nayer, Masahiro Watanabe and Minoryu Noguchi , "Real-Time Focus Range Sensor," ICCV '95, pp.995-1001, 1995"; "Shree K. Nayer and Yasuo Nakagawa, "Shape from Focus," IEEE Trans. on PAMI, Vol.16, No.8, pp.824-831, 1994" ; "A. P. Pentland, "A New Sense for Depth of Field," IEEE Trans. On Pattern Analysis and Machine Intelligence, Vol.PAMI-9, No.4, pp.523-531, 1987"; "Michio Miwa, Tomoyuki Oohara, Masahiko Ishii, Yasuharu Koike, and Makoto Sato, "A Method of Far Object Recognition using Depth from Focus," Proc.3D Image Conference '99, pp.305-307, 1999.")

This theory of "Depth from Focus" shows that whether an image is in-focused or not can be determined through an analysis of local spatial frequency on the image and a focal length showing a peak of the analyzed local spatial frequencies gives an in-focused portion. Intuitively, it could be imagined that a blurred portion has a lower spatial frequency and an in-focused portion has a higher spatial frequency. As a basic manner, while the movable focal mechanism 11A is driven to change the focal length of the lens, image data is acquired every image frame. Each image is subjected to a spatial frequency analysis locally carried out at each pixel or each region on each of the respective images, so that a portion showing a peak frequency, i.e., an in-focused portion is picked up pixel by pixel or region by region from each image. Each in-focused portion is then mapped into a single image, thus providing an all-in-focus image. In addition, based on those focal lengths, the three-dimensional data of an object imaged into the all-in-focus images can be obtained as well.

The analysis of local spatial frequency at each pixel is carried out through a spatial dispersion of image intensity values defined by the following formula, which provides an evaluated value (i.e., IQM evaluated value) of the IQM (Image Quality Measure).

$$IQM = (1/D) \sum_{x=x_i}^{x_f} \sum_{y=y_i}^{y_f} \left\{ \sum_{p=-L_c}^{L_c} \sum_{q=-L_r}^{L_r} |I(x,y) - I(x+p, y+p)| \right\}$$

In this formula, a reference "I" denotes image densities (signal intensities) and references "$(-L_c, -L_r) - (L_c, L_r)$" and "$(x_i, y_i) - (x_f, y_f)$" denote small areas for evaluating the dispersion and smoothing, respectively. The first two summation terms show the processing for smoothing, and the next processing in parenthesis, which includes the two summations, show the processing for dispersion. Further, a reference "D" denotes the number of all pixels to be evaluated, the number being used for normalization carried out pixel by pixel.

Accordingly, while moving the focal length of the movable focal mechanism 11A, the IQM evaluated value is evaluated every pixel or every region to detect a peak of the IQM evaluated values. When the peak is detected, an object distance "X" calculated using a pixel intensity value "f" and an image distance "x" is substituted into matrix elements corresponding to each pixel position. This processing is repeated for all focal lengths, whereby the respective matrices becoming an all-in-focus image and a depth image.

The processing for this IQM can be summarized as being analyzing a local spatial frequency over 3 neighborhoods (i.e., a Laplacian filter) and soothing processing over a local area of 2 x 2 pixels (i.e., a median filter). For accomplishing these filtering processes, the image processor 13 performs the analysis of such local spatial frequencies, and then performs the smoothing processing, with the result that image data which is best in-focused is detected pixel by pixel. The detected image data are mapped to form an all-in-focus image, which is then visualized.

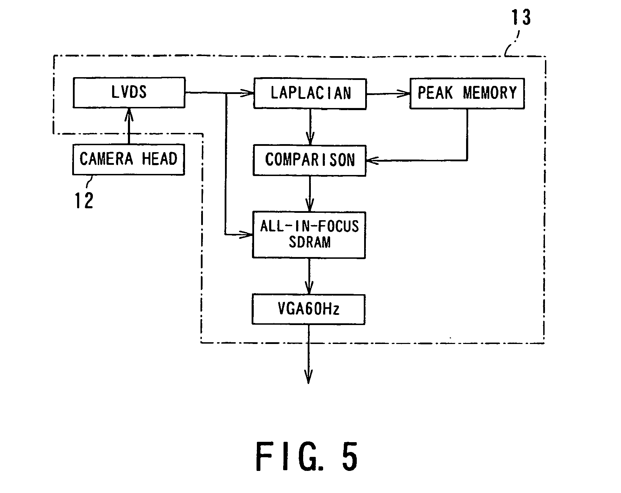

In contrast, the image processor 13 is also able to execute image processing simplified as shown in Fig. 5. An image signal of 80 MHz sent from the high-speed imaging camera 12 is subjected to an analysis of a spatial frequency at a Laplacian circuit, before being written into a peak memory. The output from the Laplacian circuit is compared with that from the peak memory to determine whether or not the output of the Laplacian circuit is a peak value. If the output is a peak, that is, an in-focused pixel image, the peak value is written into a frame memory in a SDRAM. If the output is not a peak, the output is discarded.

The image data written into the SDRAM is sent to the VGA monitor 15 via the RGB output board 14 in the form of a standard VGA signal whose frame rate is 60 Hz. In addition, three-dimensional data composed of focal lengths is converted to LVDS and then transferred to the control PC.

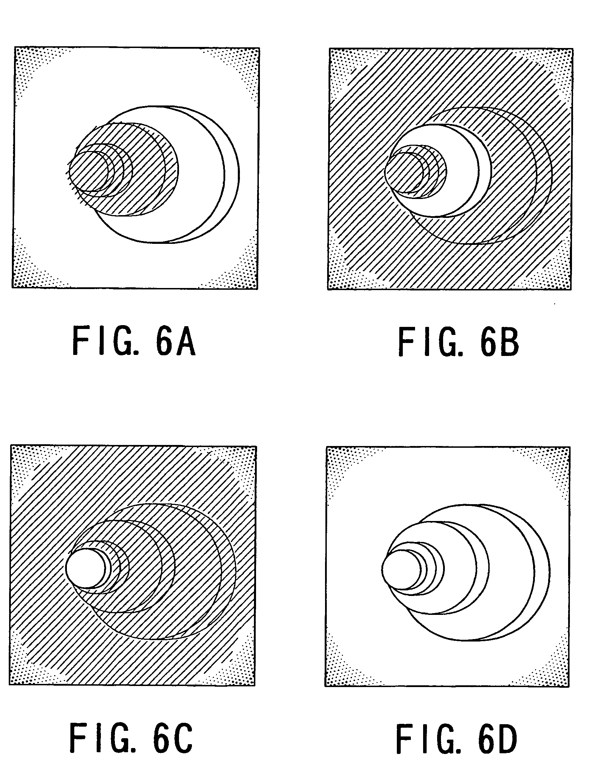

Fig. 6D pictorially shows a camera image obtained by this real-time all-in-focus microscopic camera, which is displayed by the VGA monitor 15 through the foregoing processing. The camera images shown in Figs. 6A to 6C, which are not all-in-focus images, provides a state where a lower part of an object is in-focused (Fig. 6A), another state where a middle part of the object is in-focused (Fig. 6B), and another state where an upper part of the object is in-focused (Fig. 6C), respectively. By contrast, in the case of the camera image obtained in the present embodiment, while the focus of the lens 11A is moved, real-time all-in-focus images can be obtained (at a high speed). As a result, as shown in Fig. 6D, the object is always in-focused over its all depth-directional lengths.

In this way, in the present embodiment, a real-time all-in-focus microscopic camera image can be obtained. Therefore, there is no necessity of imagining a three-dimensional shape of an object in the operator's mind. Since a field of view is entirely in-focused at any time, it is not necessary for an operator to adjust the focal length of the camera. Additionally, "live (real-time)" images can be obtained. In other words, there is hardly a delay in displaying the images of a desired field of view, so that motions of an object in the image can be observed almost in real time. Efficiency of work involving use of the microscopic camera can be raised to a great extent.

When comparing the above with the conventional all-in-focus microscopic camera in which the focus of a lens is mechanically adjusted, the effectiveness of the camera according to the present embodiment becomes remarkable. In the case of the conventional camera, it was required that the focus be mechanically adjusted and post-processing of acquired image data be done, resulting in that it took a long time (from a few seconds to a few minutes) to obtain a single image. The conventional camera provided still pictures, because it employed a normal video camera of 30 frames. The conventional camera is no longer impossible to obtain live motion pictures. Work with the microscope will get involved with a delay, because images change only at intervals of a few seconds, thus making it difficult to complete the work with the use of the conventional microscopic camera. A frame frequency that gives smoothly-changing motion pictures to the human is 30 or more pictures per second. The frame scanning rate of the real-time all-in-focus microscopic camera according to the present embodiment is 240 pictures per second. To be specific, frame images are taken in eight times during a period of 1/30 seconds as the focus is changed continuously, so that a rate of 240 (30 x 8) frames per second can be realized. This secures a sufficient real-time performance which is as close as to that obtained when the human usually sees objects (without using a microscope).

Though the human person sees objects in a real-time all-in-focus mode in normal daily activities, it is required for the human person to use a microscope once entering the microscopic world. The conventional microscope was a real-time microscope, but a single focus. For this reason, the conventional microscope urged an operator to adjust its focus in a complicated manner. In contrast, the use of the real-time all-in-focus microscopic camera according to the present invention makes it possible for the operator to handle objects in the microscopic world as if the operator performs operator's daily activities.

Furthermore, observing an object under a microscope involves preparing for a spall, which is pre-work for an operator. This preparation is, however, based on the premise that the microscope is in-focused onto a single spot. In the present embodiment, the microscopic camera provides focuses onto all the spots, so that some cases do not need the preparation of the spall.

It is estimated that the real-time all-in-focus microscopic camera according to the present embodiment provides the human person with an opportunity for observing the entire motions of a micromachine and ecology of animate things, which have yet to be observed by the human.

(Second embodiment)

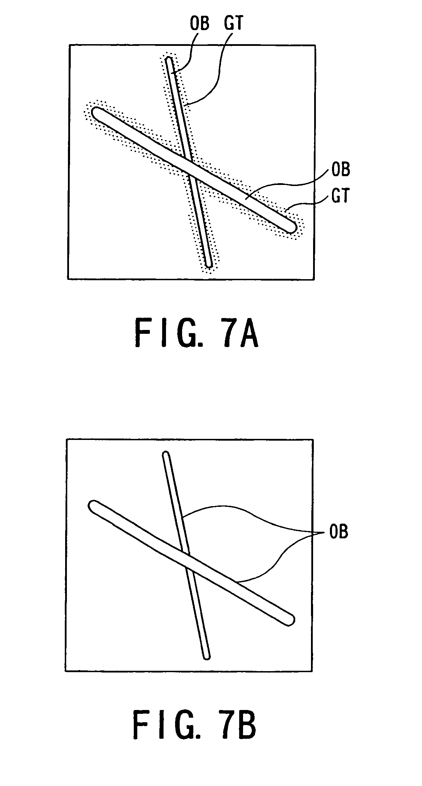

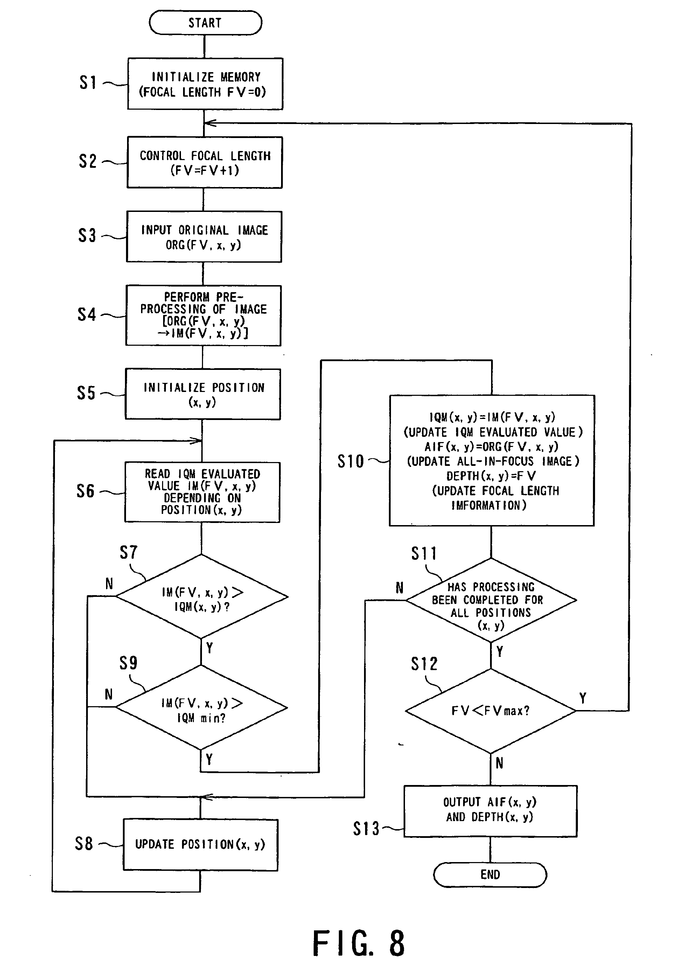

Referring to Figs. 7A, 7B and 8, a second embodiment of the real-time all-in-focus microscopic camera according to the present invention will now be described.

The real-time all-in-focus microscopic camera described in this second embodiment is directed to use where light is illuminated from the back of an object to be observed, like a biological microscope. Particularly, this embodiment concerns with a real-time all-in-focus microscopic camera with a filtering function for removing artifacts called "ghosts."

The ghosts, which are caused when the foregoing real-time all-in-focus microscopic camera according to the first embodiment is used as a biological microscope, will now be explained. In the situation all the positions of a filed of view are in-focused within a movable range of the focal length of a real-time all-in-focus microscopic camera, the foregoing DFF theory can be applicable to imaging an object. Hence, when the light is illuminated from the back of an object, like the biological microscope, no object should be photographed into the background area of an image, because, within a movable range of the focal length of the camera, there are not in-focus objects in the background area of an object to be observed.

However, actually, an object to be observed creates a blur at the periphery of the object, so that blurred portions are laid on the periphery. For this reason, if the algorithm of image processing on the foregoing IQM theory is applied to this situation as it is, the blurred portions are read out as in-focus normal image pixels. Such blurred portions are erroneously recognized as if they are actual objects existing around the object to be observed. Fig. 7A illustrates this situation, where there is an image on which an object OB to be observed is photographed together with its blurred portions represented as a ghost image GT.

Therefore, in addition to the function of displaying all-in-focus images as motion pictures at a high frame rate, like that explained in the first embodiment, a real-time all-in-focus microscopic camera according to the second embodiment is to supply more reliable images by removing the foregoing ghost image without fail, even when being used as a biological microscope.

The real-time all-in-focus microscopic camera according to the second embodiment is configured in its entire hardware architecture in the same way as that of the second embodiment, so that its configuration is omitted from being detailed. The image processor 13 may be configured as a processor with a CPU and some memories, not limited to the hardware logic circuit on FPGA, like the first embodiment. When the image processor 13 is based on the software architecture, a program providing an algorithm shown in Fig. 8 is previously stored in a memory.

In order to prevent the foregoing ghost image to be imaged, the image processor 13 processes image data acquired by moving the focal length of the movable focus mechanism 11A, so that the IQM values are evaluated, pixel by pixel, based on the algorism shown in Fig. 8. The algorithm includes filtering to remove the foregoing ghost. The algorithm shown in Fig. 8 provides a functional flow of processing carried out by the image processor 13 configured using either the hardware-logic architecture or CPU-based software architecture.

To be specific, the image processor 13 initializes a not-shown memory for a focal length FV to be used in evaluating IQM values (that is, FV=0; step S1 in Fig. 8). Then the focal length FV is incremented (FV=FV+1; step S2).

The image processor 13 then goes to the next step, where original-image intensity data ORG(FV, x, y) at a pixel position (x, y) in a two-dimensional plane locating at the current focal length FV is read out (step S3). In order to evaluate IQM values, the image processor 13 applies various types of processing to the read-out intensity data ORG (FV, x, y) as follows.

Specifically, the read-out original-image intensity data ORG(FV, x, y) is subjected to pre-processing (step S4). This pre-processing is composed of, as described before, the filtering for evaluating IQM values (i.e., a Laplacian filer for analyzing local spatial frequency and a filter for smoothing). This filtering creates, as described before, an IQM evaluated value IM(FV, x, y) indicative of what degree is in-focused at each position in the three-dimensional space defined by a field of view.

The current pixel position (x, y) is then set to a new initial position (step S5), and an IQM evaluated value IM (FV, x, y) according to the new pixel position (x, y) is read out (step S6).

The read-out IQM evaluated value IM(FV, x, y) is then compared with an IQM evaluated/updated value IQM (x, y) which is updated to have a maximum at each pixel position (x, y). That is, it is determined if IM(FV, x, y) > IQM(x, y) is met or not (step S7). When it is determined NO at this step S7, it is meant that there was a larger value than the currently processed IQM evaluated value IM(FV, x, y) in the past. In such a case, for the comparison of the IQM evaluated value at the next pixel position (x, y), the current pixel position (x, y) is updated (step S8). This positional update is followed by repeating the processing at steps S6 and S7.

In contrast, when it is determined YES at this step S7, it is meant that the currently processed IQM evaluated value IM(FV, x, y) is larger than the IQM evaluated/updated value IQM(x, y) which has been a maximum so far. In this case, the currently processed IQM evaluated value IM(FV, x, y) is greater in the in-focus extent than the past.

Therefore, only this case allows the threshold processing for removal of the ghosts to be carried out with the current IQM evaluated value IM(FV, x, y). That is, a predetermined threshold $IQM_{min}$ for the IQM evaluated values is used to determine if a condition of IM(FV, x, y) > $IQM_{min}$ is met or not (step S9).

This $IQM_{min}$ is set to a value appropriately larger than an IQM evaluated value that corresponds to a normal pixel value in the blurred areas on and around the periphery of an object to be observed. Hence, the determination at step S9 becomes NO at each pixel position (x, y) in the blurred areas (i.e., IM(FV, x, y) ≤ $IQM_{min}$).

In response to this determination of NO at step S9, the processing is made to proceed to the foregoing step S8. In other words, without executing later-described update processing (step S10) for the IQM evaluated value, the processing is forced to shift to the update of pixel positions and the comparison of an IQM evaluated value at each updated pixel position (steps S8, S6 and S7).

In contrast, when the determination at step S9 becomes YES (i.e., IM(FV, x, y) > $IQM_{min}$), the recognition is

made such that an IQM evaluated value of which in-focus degree is higher than those in the past has been obtained. Thus, in only this case, information concerning the IQM evaluation at the current pixel position is used to update the IQM evaluated/updated value IQM(x, y), an all-in-focus image AIF(x, y), and focal length information DEPTH(x, y), which have been obtained so far (step S10).

More concretely, the IQM evaluated/updated value IQM(x, y) is replaced by the currently processed IQM evaluated value IM(FV, x, y) (i.e., the update of the evaluated values), a pixel value at a corresponding position (x, y) of the all-in-focus image AIF(x, y) is replaced by corresponding data ORG(FV, x, y) of the original image (i.e., mapping of pixel images to the all-in-focus image (production)), and the focal length information DEPTH(x, y) is updated using the currently obtained focal length FV. The thus-updated IQM evaluated/updated value IQM(x, y) is used again for evaluation carried out at step S7 at the corresponding position (x, y) in a two-dimensional plane locating at the next focal length FV+ 1.

When completing the update of the information at step S10, the image processor 13 determines if the foregoing processing has finished at all the pixels (x, y) on the two-dimensional plane locating at the current focal length FV (step S11). If it is determined NO at step S11, the processing is made to return to step S8, whereby the pixel position (x, y) advances to the new one for which the foregoing processing is repeated (steps S8, S6, S7, S9 to S11).

On the other hand, when it is determined YES at step S12, that is, when the foregoing processing has been completed for all the pixel positions (x, y), it is further determined whether or not the current focal length FV is smaller than its predetermined upper limit $FV_{max}$ (step S13). When it is determined YES at this step, the recognition is made such that there still remain one or more focal lengths FV to be evaluated, whereby the processing is made to return to step S2. Responsively to this return, the foregoing evaluation processing is then carried out on a new two-dimensional plane existing at a new focal length FV.

When it is determined NO at step S12, it is recognized that the focal length FV has reached to its upper limit $FV_{max}$. Hence it is found that the evaluation of the IQM has been completed at each pixel position on each two-dimensional plane locating at each focal length within a range of given focal lengths FV. Accordingly, in response to this determination, the all-in-focus image AIF(x, y) and the focal length information DEPTH(x, y), which have been produced so far, are outputted via the RGB output board 14, and then displayed as one frame of image on the VGA monitor (step S13).

The foregoing processing and display is executed at a frame rate of 30 or more frames per second, thus supplying all-in-focus images with an excellent real-time performance.

As understood from the above, only when the AND condition of "IM(FV, x, y) > IQM(x, y) and IM(FV, x, y) > $IQM_{min}$" is fulfilled, the update processing at step S10 is performed.

As a result, even when the real-time all-in-focus microscopic camera according to the present invention is applied to, for example, a biological microscope, ghost components due to blurring of an object to be observed can be removed without fail through the performance of evaluating the IQM values. Therefore, as pictorially shown in Fig. 7B in comparison with Fig. 7B, an appearance of ghost images into all-in-focus images is avoided almost completely, thus providing reliable and high-quality all-in-focus images in real time.

Furthermore, as stated before, the process of producing all-in-focus images includes the concurrently performed computation of the focal lengths. It is thus possible to measure three-dimensional data of an object to be observed as well. Such concurrently acquired data can be used for various purposes, thus making operator's observing operations efficient and enriching observed information.

Incidentally, the configuration of the real-time all-in-focus microscopic camera according to the present invention will not be confined to that explained in the above embodiments, but a person having ordinary skill in the art can create a variety of constructions adequately altered or deformed within the scope of the claims. For example, the foregoing variable focal mechanism is not limited to the use of piezoelectric element. Alternatively, an actuator capable of moving the lens at a high speed for control of its focal length can be used.

Industrial Applicability

The real-time all-in-focus microscopic camera according to the present invention is able to display all-in-focus images as motion pictures of a higher frame rate, whereby the all-in-focus images can be provided with excellence in a real-time performance (i.e., live characteristic), as if an operator directly observes an object with the naked eye. Accordingly, the present invention is able to have much industrial applicability in the fields of various operations which require an operator to use a microscopic camera, such as operating cells or genes or assembling micro machines, acquisition of images and/or information about micro structures of substances, and biological microscopes.

**Claims**

1. A real-time all-in-focus microscopic camera comprising:

a movable focal mechanism (11A) having an optical lens of which focal length changeable within a predetermined length range during a fast repetition time regarded as substantially being real time;

a focal mechanism driver (16) driving the movable focal mechanism (11A) to change the focal length over the predetermined length range every fast repetition time;

a high-speed imaging apparatus (12) imaging an object (OB) at a fast frame rate providing each fast repetition time during which a plurality of times of imaging timing are set previously, the imaging being carried out by using the movable focal mechanism; and

an image processor (13) processing a plurality of frame images imaged at the fast frame rate by the high-speed imaging apparatus (12), into all-in-focus images at a frame rate regarded as being substantially real time, **characterized in** the high-speed imaging apparatus (12) is configured to perform synchronously with the movable focal mechanism (11A) imaging based on at least one of techniques consisting of parallel and simultaneous reading of image data from a plurality of divided regions onto which light for the imaging impinges through the movable focal mechanism (11A), and, reducing the number of pixels to be read out when reading image data from the individual pixels of a plurality of divided regions.

2. The real-time all-in-focus microscopic camera according to claim 1, further comprising a display apparatus (15) displaying the all-in-focus images processed by the image processor (13).

3. The real-time all-in-focus microscopic camera according to claim 1, wherein the image processor (13) comprises evaluation means for obtaining, pixel by pixel or region by region, an IQM (Image Quality Measure) evaluated value on each of a plurality of frames of two-dimensional images acquired at the plurality of times of imaging timing by the high-speed imaging apparatus (12) while the focal length is changed within the predetermined length range and image producing means for producing each of the all-in-focus images by mapping, pixel by pixel, image data at each pixel which is best in-focused among the plurality of frames of two-dimensional images on the basis of the IQM evaluated value obtained by the evaluation means.

4. The real-time all-in-focus microscopic camera according to claim 3, wherein the evaluation means is configured to analyzing a local spatial frequency and applying smoothing at and to image data of each pixel on each of the plurality of two-dimensional images.

5. The real-time all-in-focus microscopic camera according to claim 3, wherein the image producing means includes removal means for removing, from the image data at each of the pixels which are best in-focused respectively, image data at pixels where a blur of the object is laid on a peripheral portion of the object.

6. The real-time all-in-focus microscopic camera according to claim 5, wherein the removal means is configured to apply, to the IQM evaluated value evaluated by the evaluation means, processing using a predetermined threshold of the IQM such that the image data at the pixels where the blur of the object is laid on the peripheral portion of the object is removed.

7. The real-time all-in-focus microscopic camera according to claim 1, wherein the image processor (13) has removal means for removing, from each of the images, a ghost image caused due to a blur of the object, the blur being laid on a peripheral portion of the object.

8. A method of imaging a real-time all-in-focus image, comprising the steps of:

imaging an object (OB) to be observed through an optical lens (11A) at a fast frame rate providing each fast repetition time during which a plurality of times of imaging timing are set, previously, when a focal length of the optical lens (11A) is changed within a predetermined length range during the fast repetition time regarded as substantially being real time;

producing the plurality of frame images acquired at the fast frame rate, into all-in-focus images at a frame rate regarded as being substantially real time; and

displaying the produced all-in-focus images, **characterised in that** the step of imaging performs imaging based on at least one of techniques consisting of parallel and simultaneous reading of image data from a plurality of divided regions or onto which light for the imaging impinges through the movable focal mechanism (11A), and, reducing the number of pixels to be read out when reading image data from the individual pixels of a plurality of divided regions.

9. The method of imaging the real-time all-in-focus image according to claim 8, wherein the all-in-focus image producing step includes a removal process removing, from the image, a ghost image caused due to a blur of the object, the blur being laid on a peripheral portion of the object.

10. The real-time all-in-focus microscopic camera according to claim 3, wherein the evaluation means has a memory into which peak values of one frame of the IQM evaluated values are stored and means for comparing, pixel by pixel, the peak values stored in the memory with a further frame of the IQM evaluated values, and the image producing means is configured to write, into a display memory, image data shown by the comparison such that the image data provides the IQM evaluated value larger than the peak value at each pixel.

**Patentansprüche**

1. Echtzeit-Omnifokus-Mikroskopkamera, umfassend
   einen beweglichen Fokussiermechanismus (11A) mit einer optischen Linse, deren Brennweite innerhalb eines vorbestimmten Längenbereichs während einer schnellen Wiederholungsdauer änderbar ist, welche im Wesentlichen als Echtzeit gilt;
   einen Fokussiermechanismustreiber (16), welcher bei jeder schnellen Wiederholungsdauer den beweglichen Fokussiermechanismus (11A) zum Ändern der Brennweite über den vorbestimmten Längenbereich ansteuert;
   eine Hochgeschwindigkeits-Bildgebungsvorrichtung (12), welche ein Objekt (OB) mit einer schnellen Rahmenfolge abbildet, welche während jeder schnellen Wiederholungsdauer mehrere Male im Voraus gesetzte Bildgebungszeitpunkte liefert, wobei die Abbildung unter Verwendung des beweglichen Fokussiermechanismus ausgeführt wird; und
   ein Bildprozessor (13), welcher eine Mehrzahl von Rahmenbildern, welche mit der schnellen Rahmenfolge durch die Hochgeschwindigkeits-Bildgebungsvorrichtung (12), mit einer Rahmenfolge, welche im Wesentlichen als Echtzeit gilt, abgebildet wurden in Omnifokus-Bilder verarbeitet,
   **dadurch gekennzeichnet, dass**
   die Hochgeschwindigkeits-Bildgebungsvorrichtung (12) eingerichtet ist, synchron mit dem beweglichen Fokussiermechanismus (1 1 A) Bildgebung auf der Basis von zumindest einer der Techniken bestehend aus parallelem und simultanem Lesen von Bilddaten von einer Mehrzahl von unterteilten Gebieten, auf welche Licht für die Bildgebung durch den beweglichen Fokussiermechanismus (1 1 A) fällt und Reduzieren der Anzahl der auszulesenden Pixel beim Lesen von Bilddaten von den einzelnen Pixeln einer Mehrzahl von unterteilten Gebieten durchzuführen.

2. Echtzeit-Omnifokus-Mikroskopkamera gemäß Anspruch 1, weiterhin umfassend eine Anzeigevorrichtung (1 5), welche die von dem Bildprozessor (13) verarbeiteten Omnifokus-Bilder anzeigt.

3. Echtzeit-Omnifokus-Mikroskopkamera nach Anspruch 1, wobei der Bildprozessor (13) umfasst:

   Evaluierungsmittel zum Pixel-weisen oder Gebiets-weisen Erlangen eines IQM (Image Quality Measure; Bildqualitäts-Maß)-Evaluierungswertes auf jedem einer Mehrzahl von Rahmen von zweidimensionalen Bildern, welche durch die Hochgeschwindigkeits-Bildgebungsvorrichtung (12) zu der Mehrzahl der Bildgebungszeitpunkte erworben wird, während die Brennweite innerhalb des vorgegebenen Längenbereichs verändert wird, und
   Bilderzeugungsmittel zum Erzeugen jedes der Omnifokus-Bilder durch Pixel-weises Übertragen von Bilddaten an jedem Pixel, welcher unter der Mehrzahl von Rahmen von zweidimensionalen Bildern am besten fokussiert ist, auf Basis des IQM-Evaluierungswertes, welcher durch das Evaluierungsmittel erlangt wurde.

4. Echtzeit-Omnifokus-Mikroskopkamera nach Anspruch 3, wobei das Evaluierungsmittel eingerichtet ist, bei und auf Bilddaten von jedem Pixel auf jedem der Mehrzahl von zweidimensionalen Bildern, eine lokale Ortsfrequenz zu analysieren und Glättung anzuwenden.

5. Echtzeit-Omnifokus-Mikroskopkamera nach Anspruch 3, wobei das Bilderzeugungsmittel Entfernungsmittel enthält zum Entfernen von Bilddaten bei Pixeln, an denen eine Unschärfe des Objekts auf einen Randabschnitt des Objekts gelegt ist, aus den Bilddaten an jedem der Pixel, welche jeweils am besten fokussiert sind.

6. Echtzeit-Omnifokus-Mikroskopkamera nach Anspruch 5, wobei das Entfernungsmittel eingerichtet ist auf den IQM-Evaluierungswert, welcher durch das Evaluierungsmittel evaluiert wurde, eine Verarbeitung anzuwenden, unter Verwendung eines vorbestimmten Schwellenwertes des IQM derart, dass die Bilddaten an den Pixeln, an denen die Unschärfe des Objekts auf den Randabschnitt des Objekts gelegt ist, entfernt wird.

7. Echtzeit-Omnifokus-Mikroskopkamera nach Anspruch 1, wobei der Bildprozessor (13) Entfernungsmittel zum Entfernen eines Doppelbildes, welches durch eine Unschärfe des Objekts verursacht wird, wobei die Unschärfe auf einen Randabschnitt des Objekts gelegt ist, von jedem der Bilder, besitzt.

8. Bildgebungsverfahren eines Echtzeit-Omnifokus-Bildes, umfassend die Schritte:

Abbilden eines zu beobachtenden Objekts (OB) durch eine optische Linse (11A) mit einer schnellen Rahmenfolge, welche während jeder schnellen Wiederholungsdauer mehrere Male im Voraus gesetzte Bildgebungszeitpunkte liefert, wenn die Brennweite der optischen Linse (1 1 A) innerhalb eines vorbestimmten Längenbereichs während der schnellen Wiederholungsdauer, welche im Wesentlichen als Echtzeit gilt, verändert wird; Erzeugen der Mehrzahl von Rahmenbildern, welche mit der schnellen Rahmenrate erworben wurden, in Omnifokus-Bilder mit einer Rahmenrate, welche im Wesentlichen als Echtzeit gilt; und Anzeigen der erzeugten Omnifokus-Bilder, **dadurch gekennzeichnet, dass** der Schritt des Abbildens Bildgebung auf der Basis von zumindest einer der Techniken bestehend aus parallelem und simultanem Lesen von Bilddaten von einer Mehrzahl von unterteilten Gebieten, auf welche Licht für die Bildgebung durch den beweglichen Fokussiermechanismus (1 1 A) fällt und Reduzieren der Anzahl der auszulesenden Pixel beim Lesen von Bilddaten von den einzelnen Pixeln einer Mehrzahl von unterteilten Gebieten, durchführt.

9. Bildgebungsverfahren eines Echtzeit-Omnifokus-Bildes nach Anspruch 8, wobei der Omnifokus-Bilderzeugungsschritt einen Entfernungsprozess umfasst, welcher von dem Bild ein Doppelbild entfernt, welches durch eine Unschärfe des Objekts verursacht wird, wobei die Unschärfe auf einen Randabschnitt des Objekts gelegt ist.

10. Echtzeit-Omnifokus-Mikroskopkamera nach Anspruch 3, wobei das Evaluierungsmittel einen Speicher, in welchem Spitzenwerte der IQM-Evaluierungswerte eines Rahmens gespeichert werden und Mittel zum Pixel-weisen Vergleichen der in dem Speicher gespeicherten Spitzenwerte mit einem weiteren Rahmen der IQM-Evaluierungswerte besitzt, und das Bilderzeugungsmittel eingerichtet ist, ein durch den Vergleich erhaltenes Bilddatum in einen Anzeigespeicher zu schreiben, so dass das Bilddatum an jedem Pixel den IQM-Evaluierungswert, welcher größer als der Spitzenwert ist, liefert.

**Revendications**

1. Caméra de microscope omnifocale en temps réel, comprenant :

un mécanisme focal mobile (11A) comportant une lentille optique dont la longueur focale peut être modifiée dans les limites d'une plage de longueurs prédéterminée durant un temps de répétition rapide considéré comme étant pratiquement en temps réel ; un circuit d'excitation de mécanisme focal (16) commandant le mécanisme focal mobile (11A) de manière à modifier la longueur focale sur la plage de longueurs prédéterminée à chaque temps de répétition rapide ; un appareil de formation d'image à grande vitesse (12) formant une image d'un objet (OB) à une fréquence de trame rapide fournissant chaque temps de répétition rapide durant lequel une pluralité de temps de temporisation de formation d'image sont fixés au préalable, la formation d'image étant mise en oeuvre en utilisant le mécanisme focal mobile, et un processeur d'images (13) traitant une pluralité d'images de trame imagées à la fréquence de trame rapide par l'appareil de formation d'image à grande vitesse (12), en images omnifocales à une fréquence de trame considérée comme étant pratiquement en temps réel, **caractérisée en ce que** l'appareil de formation d'image à grande vitesse (12) est configuré de manière à exécuter, de manière synchrone avec le mécanisme focal mobile (11A), une formation d'image sur la base d'au moins une des techniques consistant en une lecture parallèle et simultanée de données-image provenant d'une pluralité de régions divisées sur lesquelles la lumière destinée à la formation d'image est incidente par le biais du mécanisme focal mobile (11A), et en la réduction du nombre de pixels à lire lors de la lecture de données-image provenant de pixels individuels d'une pluralité de régions divisées.

2. Caméra de microscope omnifocale en temps réel selon la revendication 1, comprenant en outre un appareil d'affichage (15) affichant les images omnifocales traitées par le processeur d'images (13).

**3.** Caméra de microscope omnifocale en temps réel selon la revendication 1, dans laquelle le processeur d'images (13) comprend :

un moyen d'évaluation destiné à obtenir, pixel par pixel ou région par région, une valeur évaluée pour la mesure de qualité d'image (IQM, Image Quality Measure), pour chacune d'une pluralité de trames d'images bidimensionnelles acquises lors de la pluralité de temps de temporisation de formation d'image par l'appareil de formation d'image à grande vitesse (12) tandis que la longueur focale est modifiée dans les limites de la plage de longueurs prédéterminée, et

un moyen de production d'images destiné à produire chacune des images omnifocales par un mappage, pixel par pixel, des données-images au niveau de chaque pixel s'avérant le plus net parmi la pluralité de trames d'images bidimensionnelles sur la base de la valeur évaluée IQM obtenue par le moyen d'évaluation.

**4.** Caméra de microscope omnifocale en temps réel selon la revendication 3, dans laquelle le moyen d'évaluation est configuré de manière à analyser une fréquence spatiale locale et à appliquer un lissage au niveau des données-images de chaque pixel, et sur celles-ci, pour chacune de la pluralité d'images bidimensionnelles.

**5.** Caméra de microscope omnifocale en temps réel selon la revendication 3, dans laquelle le moyen de production d'images inclut un moyen d'élimination éliminant, parmi les données-image au niveau de chacun des pixels s'avérant respectivement le plus net, des données-image au niveau de pixels où un flou de l'objet se trouve sur une partie périphérique de l'objet.

**6.** Caméra de microscope omnifocale en temps réel selon la revendication 5, dans laquelle le moyen d'élimination est configuré de manière à appliquer, à la valeur évaluée d'IQM évaluée par le moyen d'évaluation, un traitement à l'aide d'un seuil prédéterminé de l'IQM tel que l'on élimine les données-image au niveau des pixels où le flou de l'objet se trouve sur la partie périphérique de l'objet.

**7.** Caméra de microscope omnifocale en temps réel selon la revendication 1, dans laquelle le processeur d'images (13) comprend un moyen d'élimination destiné à éliminer, parmi chacune des images, une image fantôme provoquée par un flou de l'objet, le flou se trouvant sur une partie périphérique de l'objet.

**8.** Procédé de formation d'image d'une image omnifocale en temps réel, comprenant les étapes suivantes :

la formation d'image d'un objet (OB) à observer par le biais d'une lentille optique (11A) à une fréquence de trame rapide fournissant chaque temps de répétition rapide durant lequel une pluralité de temps de temporisation de formation d'image sont fixés au préalable, lorsqu'une longueur focale de la lentille optique (11A) est modifiée dans les limites d'une plage de longueurs prédéterminée durant le temps de répétition rapide considéré comme étant pratiquement en temps réel ;

la production d'une pluralité d'images de trame acquises à la fréquence de trame rapide en images omnifocales à une fréquence de trame considérée comme étant pratiquement en temps réel, et

l'affichage des images omnifocales produites,

**caractérisé en ce que** l'étape de formation d'image exécute une formation d'image sur la base d'au moins une des techniques consistant en une lecture parallèle et simultanée de données-image provenant d'une pluralité de régions divisées sur lesquelles la lumière destinée à la formation d'image est incidente par le biais du mécanisme focal mobile (11A), et en la réduction du nombre de pixels à lire lors de la lecture de données-image provenant de pixels individuels d'une pluralité de régions divisées.

**9.** Procédé de formation d'image de l'image omnifocale en temps réel selon la revendication 8, dans lequel l'étape de production d'images omnifocales inclut un processus d'élimination destiné à éliminer, dans l'image, une image fantôme provoquée par un flou de l'objet, le flou se trouvant sur une partie périphérique de l'objet.

**10.** Caméra de microscope omnifocale en temps réel selon la revendication 3, dans laquelle le moyen d'évaluation comprend une mémoire dans laquelle sont stockées des valeurs maximales d'une trame des valeurs évaluées d'IQM, et un moyen destiné à comparer, pixel par pixel, les valeurs maximales stockées dans la mémoire avec une autre trame des valeurs évaluées d'IQM, et dans laquelle le moyen de production d'images est configuré de manière à écrire, dans une mémoire d'affichage, des données-image montrées par la comparaison, de telle sorte que les données-image fournissent la valeur évaluée d'IQM supérieure à la valeur maximale au niveau de chaque pixel.

FIG. 1

POWER SUPPLY 12V

16

CONTROL PERSONAL COMPUTER

12

CAMERA

11

POWER SUPPLY ±36V

16

FOCAL MECHANISM DRIVER

D/A+AMP.

13

IMAGE PROCESSOR

POWER SUPPLY 12V

15

LIGHTING SOURCE

11C: ZOOM LENS

11B

TRIANGULAR WAVE

11A: VARIABLE FOCAL MECHANISM

14

RGB OUTPUT BOARD

ANALOG RGB

VGA MONITOR

OB:OBJECT

EP 1 381 229 B1

13

FIG. 2

LENS-DRIVING
TRIANGULAR WAVE :

SCAN TIMING :     ||||||||  ||||||||  ||||||||  ||||||||

# FIG. 3

12A

12B

| 256×16 1 | | AMP · A/D  etc. |
| 256×16 2 | | AMP · A/D  etc. |
| 256×16 3 | | AMP · A/D  etc. |
| ⋮ | | ⋮ |
| 256×16 | | AMP · A/D  etc. |

HIGH-SPEED
SENSOR ARRAY

13

IMAGE PROCESSOR

# FIG. 4

13

```
┌ ─ ─ ─ ─ ─ ─ ─ ─ ─ ─ ─ ─ ─ ─ ─ ─ ─ ─ ─ ─ ─ ─ ─ ┐
```

┌──────────┐        ┌───────────┐        ┌──────────────┐
│   LVDS   │───────→│ LAPLACIAN │───────→│ PEAK MEMORY  │
└──────────┘        └───────────┘        └──────────────┘
      ↑                    │
┌──────────────┐     ┌───────────┐
│ CAMERA HEAD  │     │COMPARISON │←────────────┘
└──────────────┘     └───────────┘
      12                   │
               ┌───────────────────┐
               │   ALL-IN-FOCUS     │
               │      SDRAM         │
               └───────────────────┘
                         │
               ┌───────────────────┐
               │     VGA60Hz        │
               └───────────────────┘
                         │
                         ↓

# FIG. 5

FIG. 6A

FIG. 6B

FIG. 6C

FIG. 6D

OB  GT

OB
GT

# FIG. 7A

OB

# FIG. 7B

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000316120 A

### Non-patent literature cited in the description

- A Long-focus depth visualizing mechanism using a variable focal lens. **KANECO.** Institute of Electrical Engineers. Micromachine study group, 1997
- **TAKASHI KANECO et al.** A New Compact and Quick-Response Dynamic Focusing Lens. *Transducers,* 1997, vol. 97
- **MASAHIRO WATANABE ; SHREE K. NAYER.** Minimal Operator Set for Passive Depth from Defocus. *CVPR'96,* 1996, 431-438
- **SHREE K. NAYER ; MASAHIRO WATANABE ; MINORYU NOGUCHI.** Real-Time Focus Range Sensor. *ICCV '95,* 1995, 995-1001
- **SHREE K. NAYER ; YASUO NAKAGAWA.** Shape from Focus. *IEEE Trans. on PAMI,* 1994, vol. 16 (8), 824-831
- **A. P. PENTLAND.** A New Sense for Depth of Field. *IEEE Trans. On Pattern Analysis and Machine Intelligence,* 1987, vol. PAMI-9 (4), 523-531
- **MICHIO MIWA ; TOMOYUKI OOHARA ; MASAHIKO ISHII ; YASUHARU KOIKE ; MAKOTO SATO.** A Method of Far Object Recognition using Depth from Focus. *Proc.3D Image Conference '99,* 1999, 305-307